(19) Europäisches Patentamt
European Patent Office
Office européen des brevets

(11) Veröffentlichungsnummer: **0 338 398**
**A1**

(12) # EUROPÄISCHE PATENTANMELDUNG

(21) Anmeldenummer: **89106481.8**

(22) Anmeldetag: **12.04.89**

(51) Int. Cl.4: **A01N 25/30 , A01N 31/02 , A01N 31/08 , A01N 35/02 , A01N 37/16 , A01N 59/00 , A01N 59/12**

(30) Priorität: **21.04.88 DE 3813399**

(43) Veröffentlichungstag der Anmeldung: **25.10.89 Patentblatt 89/43**

(84) Benannte Vertragsstaaten: **ES**

(71) Anmelder: **Henkel Kommanditgesellschaft auf Aktien**
**Postfach 1100 Henkelstrasse 67**
**D-4000 Düsseldorf 1(DE)**

(72) Erfinder: **Schenker, Gilbert, Dr.**
**Hermann-Hesse Strasse 5**
**D-4006 Erkrath 2(DE)**
Erfinder: **Guhl, Walter, Dr.**
**Wiedenhoferstrasse 27**
**D-5657 Haan(DE)**

(54) **Parasitenabtötende Desinfektionsmittel.**

(57) Die Erfindung betrifft Desinfektionsmittel zur Bekämpfung und Abtötung von parasitären, invasionsfähigen Dauerformen auf der Basis von Gemischen aus desinfizierenden Wirkstoffen und sulfatierten Hydroxymischethern als oberflächenaktive Wirkstoffe, die dadurch gekennzeichnet sind, daß sie einen oder mehrere Desinfektionswirkstoffe aus der Gruppe aliphatische Aldehyde mit 1 bis 5 C-Atomen, aliphatische Alkohole mit 1 bis 4 C-Atomen, unsubstituierte und substituierte Phenole, $Cl_2$- und $O_2$-entwickelnde Reagenzien und Aktivjod enthaltende Reagenzien, einen oder mehrere sulfatierte Hydroxymischether als oberflächenaktive Wirkstoffe und Wasser enthalten, sowie die Verwendung derartiger Desinfektionsmittel zur Bekämpfung und Abtötung parasitärer, invasionsfähiger Dauerformen.

EP 0 338 398 A1

## Parasitenabtötende Desinfektionsmittel

Die Erfindung betrifft Desinfektionsmittel zur Bekämpfung und Abtötung von parasitären Dauerformen auf der Basis von Gemischen aus desinfizierenden Wirkstoffen und oberflächenaktiven Wirkstoffen.

Die landwirtschaftliche Haltung und Zucht verschiedener Tierarten, beispielsweise Geflügel, Schweine oder Rinder, wird dadurch beeinträchtigt bzw. die Zuchterfolge werden dadurch gemindert, daß die genannten Tierarten von Coccidien und Spulwürmern befallen werden. Diese Parasitenarten schmarotzen im Darmtrakt und schädigen die Tiere durch Nährstoffentzug, Saug- und Einwanderungswunden und führen bei Massenbefall einzelner Tiere zu Leistungsdepression, Kümmern oder Tod, weil u.a. die von den Parasiten ausgeschiedenen Toxine auf das organische Gleichgewicht der Nutztiere einwirken.

Eine gezielte Wurm- bzw. Coccidienbekämpfung kann jedoch nicht darauf beschränkt werden, den von den Parasiten befallenen Nutztieren Wurm- bzw. Coccidienmittel zu verfüttern, um die Parasiten im Darmkanal abzutöten. Vielmehr muß bei der Parasitenbekämpfung berücksichtigt werden, daß die Schmarotzer sehr wiederstandsfähige parasitäre Dauerformen (Spulwurmeier, Coccidienoozysten) ausscheiden, die mit dem Kot der befallenen Nutztiere an die Außenwelt gelangen und den Stall hverseuchen. Diese Dauerformen sind erneut invasionsfähig, d.h. sie können wieder in den Nährstoffkreislauf der Nutztiere Eingang finden und dadurch von neuem in den Organismus der Nutztiere gelangen. Die Folge ist ein erneuter Befall mit Coccidien bzw. Spulwürmern.

Üblicherweise wird daher - in Ergänzung zu einer Verfütterung von Anti-Parasitenmitteln - gegen die ausgeschiedenen, wiederstandsfähigen Dauerformen der Parasiten eine Spezialdesinfektion der Stallungen durchgeführt, wodurch die Dauerformen abgetötet werden und der Kreislauf (Ausscheidung der Parasitendauerformen und Wiederaufnahme über den Kot) durch Desinfektion wirksam unterbrochen wird.

Für derartige Stalldesinfektionsmaßnahmen sind bereits Spezialdesinfektionsmittel auf der Basis von phenolischen Wirkstoffen und Schwefelkohlenstoff erfolgreich in Gebrauch. Dem Schwefelkohlenstoff fällt dabei die Aufgabe zu, die sehr festen Membranen der Parasiteneier oder -oozysten zu durchdringen und den phenolischen Wirkstoff zur Abtötung des Ei-bzw. Oozysteninhaltes in das Innere der Parasitendauerformen einzuschleusen. Der Einsatz von Schwefelkohlenstoff für derartige Zwecke ist jedoch wegen der hohen Explosionsgefahr von $CS_2$ und seiner starken Toxizität nicht unbedenklich.

In der DE-OS 23 17 225 wird zur Überwindung dieser Nachteile ein Mittel zur Stalldesinfektion auf der Basis von desinfizierend wirkenden Phenolen oder Phenolderivaten und einem die Membranen der parasitären Dauerformen durchdringenden Lösungsmittel vorgeschlagen, das als Lösungsmittel eine Kombination aus Perchlorethylen und einem niederen Alkohol enthält. Nachteil dieser Zusammensetzung zur Desinfektion gegen parasitäre, invasionsfähige Dauerformen ist jedoch der Anteil an Perchlorethylen, der mit 10 bis 50 Gew-% ausgesprochen hoch liegt. Chlorierte Kohlenwasserstoffe sind, wie inzwischen allgemein bekannt, als ausgesprochen langlebige Umweltgifte erkannt worden, die sich insbesondere im Fettgewebe höherer Organismen anreichern und in der Nahrungskette zu Dauerschäden in höheren Organismen führen können. Zudem erwiesen sich Mittel mit einem Gehalt an chlorierten Kohlenwasserstoffen in der Praxis als nicht so wirksam, daß sich diese hätten durchsetzen können. Aus ökologischen und ökonomischen Gründen sollte deswegen auf die Verwendung chlorierter Kohlenwasserstoffe in Desinfektionsmitteln zur Bekämpfung parasitärer Dauerformen weitgehend, besser vollständig, verzichtet werden.

Die Erfindung stellte sich die Aufgabe, Desinfektionsmittel für die Verwendung in der Bekämpfung und Abtötung parasitärer Dauerformen, wie Spulwurmeier oder Coccidienoozysten zur Verfügung zu stellen, die die genannten Nachteile des Standes der Technik nicht aufweisen. So sollte eine gezielte Wirksamkeit der Desinfektionsmittel gegen die genannten parasitären invasionsfähigen Dauerformen mit einer guten Handhabbarkeit kombiniert, d.h. insbesondere die aus der Verwendung von Schwefelkohlenstoff bekannte Explosionsgefahr bzw. Toxizität völlig vermieden werden. Zudem sollten ausschließlich Bestandteile in den Desinfektionsmitteln Verwendung finden, die keine Umweltgefährdung mit sich bringen, wie sie von chlorierten Kohlenwasserstoffen bekannt ist. Erwünscht war außerdem eine desinfizierende Wirkung auch gegenüber sonstigen, in Tierstallungen auftretenden Schädlingen, wie Pilzen, Bakterien oder Viren, deren Bekämpfung auf diese Weise gleichzeitg mit der Bekämpfung schwierig abzutötender parasitärer Formen erfolgen könnte.

Die Erfindung betrifft Desinfektionsmittel zur Bekämpfung und Abtötung von parasitären, invasionsfähigen Dauerformen auf der Basis von Gemischen aus desinfizierenden Wirkstoffen und oberflächenaktiven Wirkstoffen, die dadurch gekennzeichnet sind, daß sie einen oder mehrere Desinfektionswirkstoffe aus der Gruppe aliphatische Aldehyde mit 1 bis 5 C-Atomen, aliphatische Alkohole mit 1 bis 4 C-Atomen, unsubstituierte und substituierte Phenole, $Cl_2$- und $O_2$-entwickelnde Reagenzien und Aktivjod-enthaltende Reagenzien, einen oder mehrere sulfatierte Hydroxyalkylpolyethylen- und Hydroxyalkylpolypropylenglykolether, nachfolgend "sulfatierte Hydroxymischether" genannt, als oberflächenaktive Wirkstoffe und Wasser enthalten.

Die Erfindung betrifft außerdem die Verwendung der genannten Desinfektionsmittel zur Bekämpfung und Abtötung von parasitären, invasionsfähigen Dauerformen.

Die erfindungsgemäßen Desinfektionsmittel zur Bekämpfung und Abtötung parasitärer, invasionsfähiger Dauerformen, insbesondere von Spulwurmeiern und Coccidienoozysten, enthalten im wesentlichen zwei Gruppen von Wirkstoffen: desinfizierend wirkende Substanzen und sulfatierte Hydroxymischether als oberflächenaktive Wirkstoffe. Gegebenenfalls können, wie weiter unten ausgeführt, auch noch weitere, in derartigen Desinfektionsmitteln übliche Duft- und/oder Hilfsstoffe in den erfindungsgemäßen Mitteln enthalten sein. Als Lösemittel, das nebenbei auch die Homogenität und Lagerbeständigkeit der Mittel wesentlich verbessert und ihre Auflösbarkeit in Wasser bei der Herstellung verdünnter Desinfektionslösungen erleichtert, ist in den erfindungsgemäßen Desinfektionsmitteln noch Wasser enthalten.

Erfindungsgemäß sind die desinfizierend wirkenden Komponenten aus der Gruppe der aliphatischen Aldehyde mit 1 bis 5 C-Atomen, der aliphatischen Alkohole mit 1 bis 4 C-Atomen, der unsubsituierten und substituierten Phenole, der $Cl_2$- und $O_2$-entwickelnden Reagenzien und der Aktivjod enthaltenden Reagenzien ausgewählt. Als aliphatische Aldehyde kommen somit Methanal (Formaldehyd), Ethanal (Acetaldehyd), Propanal (Propionaldehyd), Butanal (Butyraldehyd), Pentanal (Valeraldehyd), aber auch Dialdehyde wie beispielsweise Glyoxal oder Glutardialdehyd, in Frage. Von den genannten Aldehyden sind Formaldehyd, Glyoxal und Glutardialdehyd als bevorzugte Aldehyde zu nennen, da sie vergleichsweise leicht und preiswert zugänglich sind und eine ausgezeichnete desinfizierende Wirkung ausüben. Mit besonderem Vorteil, d.h. mit besonders guter Wirksamkeit, wird als desinfizierender Wirkstoff in den erfindungsgemäßen Desinfektionsmitteln Formaldehyd verwendet.

Weitere desinfizierende Wirkstoffe in den erfindungsgemäßen Desinfektionsmitteln können aliphatische Alkohole mit 1 bis 4 C-Atomen sein. Es kommen Methanol, Ethanol, n-Propanol, i-Propanol, n-Butanol, i-Butanol oder t-Butanol als desinfizierend wirkende aliphatische Alkohole in Frage. Bevorzugt werden Methanol, Ethanol, n-Propanol und i-Propanol verwendet, wobei i-Propanol aufgrund seiner guten desinfizierenden Wirksamkeit als besonders bevorzugt zu nennen ist.

Die erfindungsgemäßen Desinfektionsmittel können als Desinfektionswirkstoffe auch eine oder mehrere Verbindungen aus der Gruppe der unsubstituierten oder substituierten Phenole enthalten. Als solche kommen beispielsweise Phenol selbst, Kresole und substituierte, beispielsweise chlorierte Phenole und Kresole in Frage. Bevorzugt wird p-Chlor-m-kresol verwendet, doch kommen auch andere Phenol- bzw. Kresolderivate, wie o-Kresol, m-Kresol, p-Kresol, o-Phenylphenol, Pentachlorphenol oder Hexachlorophen in Frage. Aus der Gruppe der Phenole werden mit Vorteil Phenol und chlorierte Phenole verwendet.

Erfindungsgemäß können die Desinfektionsmittel zur Bekämpfung und Abtötung von parasitären, invasionsfähigen Dauerformen als Desinfektionswirkstoffe auch Reagenzien enthalten, aus denen sich in situ $Cl_2$ oder $O_2$ entwickeln läßt. Bevorzugte Reagenzien aus dieser Gruppe sind wasserlösliche Alkalimetall-Hypohalogenite, Wasserstoffperoxid und Peroxocarbonsäuren mit 1 bis 4 C-Atomen. Als Verbindungen der letzteren Klasse kommen somit Peroxoameisensäure, Peroxoessigsäure, Peroxopropionsäure oder Peroxobuttersäure in erster Linie in Betracht. Üblicherweise wird mit Vorteil Peroxoessigsäure als Peroxocarbonsäure verwendet, während das bevorzugte, $Cl_2$-entwickelnde Reagenz Natriumhypochlorit ist.

Bekanntermaßen zeigen auch solche Reagenzien desinfizierende Wirkung, die elementares Jod in sogenannter "aktiver Form" enthalten. Dies bedeutet, daß derartige Reagenzien in der Lage sind, aufgrund ihres speziellen Charakters kontinuierlich mehr oder weniger große Mengen aktiven, d.h. elementaren, desinfizierend wirkenden Jods freizusetzen. Derartige Reagenzien können auch in den erfindungsgemäßen Desinfektionsmitteln zur Bekämpfung und Abtötung parasitärer, invasionsfähiger Dauerformen enthalten sein. Bevorzugte Verbindung aus der Klasse der Aktivjod enthaltenden Reagenzien ist PVP-Jod.

Je nach der desinfizierenden Wirksamkeit des desinfektionsaktiven Wirkstoffs aus der Gruppe der oben genannten Verbin dungen, von denen einer einzeln oder mehrere in Kombination miteinander eingesetzt werden können, sind in den erfindungsgemäßen Desinfektionsmitteln die Desinfektionswirkstoffe in Mengen von 0,1 bis 80 Gew.-%, bezogen auf das Gesamtgewicht des Desinfektionsmittel-Konzentrats, enthalten. Bevorzugte Mengenbereiche der Desinfektionswirkstoffe liegen bei 5 bis 60 Gew.-%, wobei die Mengen der einzelnen Wirkstoffe einerseits oder der Desinfektions-Wirkstoff-Kombinationen andererseits über den gesamten Bereich innerhalb der genannten Grenzen schwanken können.

Neben dem bzw. den desinfizierend wirkenden Stoffen aus der oben genannten Gruppe enthalten die Desinfektionsmittel zur Bekämpfung und Abtötung parasitärer, invasionsfähiger Dauerformen gemäß der Erfindung einen oder mehrere sulfatierte Hydroxymischether als oberflächenaktive Wirkstoffe. Diese finden sich in den Desinfektionsmitteln in Mengen von 10 bis 50 Gew.-%, bezogen auf das Gesamtgewicht des Desinfektionsmittelkonzentrats. Bevorzugt sind die oberflächenaktiven Wirkstoffe in Mengen von 15 bis 40

Gew.-% vorhanden, wobei die jeweilige Anwendungskonzentration von der oberflächenaktiven Wirksamkeit bzw. der die natürliche Hülle der parasitären Dauerformen permeabel machenden Wirksamkeit der oberflächenaktiven Wirkstoffe abhängt. Es können, wie auch im Falle der desinfizierend wirkenden Substanzen, Einzelsubstanzen aus der genannten Gruppe eingesetzt werden; es ist jedoch auch möglich, zwei oder mehrere sulfatierte Hydroxymischether als oberflächenaktive Wirkstoffe in Kombination miteinander in beliebigen Mengenverhältnissen einzusetzen.

Als oberflächenaktive Wirkstoffe kommen zahlreiche sulfatierte Hydroxymischether in Frage, die die Benetzungswirkung des erfindungsgemäßen Desinfektionsmittels verbessern und in der Lage sind, die Eihülle der parasitären Dauerformen permeabel zu machen.

Als oberflächenaktive Wirkstoffe dienen sulfatierte Hydroxyalkylpolyethylen- und Hydroxyalkylpolypropylenglykolether der allgemeinen Formel (I)

$$R^1-\underset{\displaystyle OSO_3M}{CH}-\overset{\displaystyle R^3}{CH}-(O\overset{\displaystyle R^4}{CH}-CH_2)_n-OR^2 \qquad (I)$$

in der

$R^1$ für Wasserstoff oder einen linearen Alkylrest mit 1 bis 16 C-Atomen,
$R^2$ für einen linearen oder verzweigten, gesättigten Alkylrest mit 1 bis 22 C-Atomen,
$R^3$ für Wasserstoff oder einen linearen Alkylrest mit 1 bis 16 C-Atomen,
$R^4$ für Wasserstoff oder eine Methylgruppe,
M für Wasserstoff, Ammonium, Alkylammonium, Alkanolammonium, worin die Alkyl- und Alkanolreste je 1 bis 4 C-Atome haben, oder ein einwertiges Metallatom und
n für eine Zahl im Bereich von 0 bis 12

stehen, mit der Maßgabe, daß die Gesamtzahl der in $R^1$ und $R^3$ enthaltenen C-Atome 6 bis 16 beträgt, sowie Mischungen mehrerer derartiger Verbindungen.

Diese werden dadurch hergestellt, daß man Epoxide der allgemeinen Formel (II)

$$R^1-\overset{\displaystyle O}{CH-CH}-R^3 \qquad (II)$$

in der $R^1$ und $R^3$ die oben angegebenen Bedeutungen haben, mit Alkoholalkoxylaten der allgemeinen Formel (III)

$$H-(O\overset{\displaystyle R^4}{CH}-CH_2)_n-OR^2 \qquad (III)$$

in der $R^2$, $R^4$ und n die oben angegebenen Bedeutungen haben, bei erhöhter Temperatur in Gegenwart eines Katalysators zu Hydroxyalkylpolyethylen- und Hydroxyalkylpolypropylenglykolethern der allgemeinen Formel (IV)

$$R^1-\underset{\displaystyle OH}{CH}-\overset{\displaystyle R^3}{CH}-(O\overset{\displaystyle R^4}{CH}-CH_2)_n-OR^2 \qquad (IV)$$

in der $R^1$, $R^2$, $R^3$, $R^4$ und n die oben angegebenen Bedeutungen haben, oder deren Mischungen umsetzt, die so erhaltenen Verbindungen (IV) oder deren Mischungen bei erhöhter Temperatur mit einem Sulfatierungsreagenz zur Umsetzung bringt, das rohe Sulfierprodukt in eine wäßrige basische Lösung einträgt und

das Gemisch bei erhöhter Temperatur hält, das Gemisch auf einen pH-Wert im neutralen bzw. schwach alkalischen Bereich bringt und die so erhaltenen Produkte (I) oder deren Mischungen gewünschtenfalls in an sich bekannter Weise aus dem Reaktionsgemisch isoliert.

Die Einzelheiten der Herstellung der sulfatierten Hydroxymischether sind in der deutschen Patentanmeldung P 37 23 354.8 beschrieben, die Ausgangsstoffe zu deren Synthese in der DE-OS 33 45 349.

In bevorzugten Hydroxyalkylpolyethylen- und Hydroxyalkylpolypropylenglykolethern der allgemeinen Formel (I) steht $R^1$ für lineare Alkylreste mit 8 bis 12 C-Atomen und $R^3$ für Wasserstoff.

In der oben genannten allgemeinen Formel (I) steht $R^2$ erfindungsgemäß für einen linearen oder verzweigten, gesättigten Alkylrest mit 1 bis 22 C-Atomen. Es kommen somit als Substituent $R^2$ die Reste Methyl, Ethyl, n-Propyl, n-Butyl, n-Pentyl, n-Hexyl, n-Heptyl, n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octydecyl, n-Nonadecyl, n-Eicosyl, n-Uneicosyl und n-Docosyl sowie die verzweigtkettigen Isomeren der genannten Alkylreste in Frage.

In einer bevorzugten Ausführungsform steht $R^2$ für lineare, gesättigte Alkylreste mit 1 bis 22 C-Atomen.

Eine besonders bevorzugte Ausführungsform umfaßt sulfatierte Hydroxyalkylpolyethylen- und Hydroxyalkylpolypropylenglykolether der allgemeinen Formel (I), in der $R^2$ für lineare, gesättigte Alkylreste mit 4 bis 18 C-Atomen, bevorzugt für solche Alkylreste mit 8 bis 14 C-Atomen, steht.

In der oben genannten allgemeinen Formel (I), die die Verbindungen repräsentiert, steht $R^4$ für Wasserstoff oder eine Methylgruppe, wobei die Bedeutung "Wasserstoff" für $R^4$ bevorzugt ist.

In der allgemeinen Formel (I) hat n die Bedeutung einer Zahl von 0 bis 12, wobei der Bereich von 4 bis 12 für n bevorzugt ist. Dies bedeutet, daß in den Hydroxyalkylpolyethylen- und Hydroxyalkylpolypropylenglykolethern 0 bis 12 Ethoxy- oder Propoxyreste, bevorzugt 4 bis 12 Ethoxy- bzw. Propoxyreste in die Molekülkette eingebaut sind. Es ist jedoch auch möglich, daß in den genannten Verbindungen Ethoxyreste und Propoxyreste nebeneinander in beliebigem Verhältnis und beliebiger Reihenfolge in die Molekülkette eingebaut sind; derartige gemischte Ether fallen ebenfalls unter die allgemeine Formel (I).

Die Bedeutung von M in der oben genannten allgemeinen Formel (I) ist Wasserstoff, Ammonium, Alkylammonium, Alkanolammonium oder ein einwertiges Metall, wobei die Alkyl- und Alkanolreste der genannten organischen Ammoniumionen je 1 bis 4 C-Atome haben können. In Verbindungen der allgemeinen Formel (I), die gemäß der Erfindung bevorzugt sind, steht M für ein Alkalimetall, wobei besonders bevorzugt solche Verbindungen (I) sind, in denen M für Natrium oder Kalium steht.

Ein Vorteil der erfindungsgemäß einzusetzenden Verbindungen gegenüber anderen oberflächenaktiven Wirkstoffen aus dem Stand der Technik ist, daß sie nicht zur Schaumbildung neigen und ein vergleichbares, wenn nicht ein besseres Netzvermögen als die meisten Verbindungen aus dem Stand der Technik aufweisen.

Die erfindungsgemäß einzusetzenden Verbindungen der allgemeinen Formel (I) sind jedoch auch - was mit der vorliegenden Erfindung hauptsächlich angestrebt war - hervorragend biologisch abbaubar. Sie zeigen einen ausgezeichneten Primärabbau % MBAS- bzw. % BiAS-Abnahme nach 19 Tagen im DECD-Screening-Test mit Abbauraten im Bereich von 85-99 % und erfüllen damit die geltenden gesetzlichen Vorschriften. Sogar im GF-Test (GF = geschlossene Flasche), der im Vergleich zu den sonst üblichen Prüfmethoden sehr viel höhere Anforderungen an die biologische Abbaubarkeit der getesteten Verbindungen stellt, werden sehr gute Ergebnisse erreicht: Die Verbindungen weisen $BSB_{30}$-Werte von z.T. deutlich über 60 % auf und sind daher als "readily biodegradable" einzustufen. Darüber hinaus weisen die Produkte der allgemeinen Formel (I) im international anerkannten Zebrabarbentest eine sehr geringe Fischtoxität auf, die z. T. deutlich geringer ist als die Handelsüblicher Tenside. Eine Beeinträchtigung der Abwässer bei Verwendung der erfindungsgemäßen Verbindungen der allgemeinen Formel (I) ist also nicht zu befürchten.

Von der vorliegenden Erfindung werden auch Mischungen mehrerer Verbindungen der allgemeinen Formel (I) erfaßt. Mischungen mehrerer Verbindungen (I) entstehen insbesondere dann, wenn schon Vorstufen im Rahmen des industriellen Verfahrens in Form von Mischungen mehrerer gleichartiger Verbindungen anfallen; die Weiterbehandlung solcher Mischungen führt dann in der Regel nicht zu einem einheitlichen Reaktionsprodukt, sondern wiederum zu Produktmischungen, deren Bestandteile jedoch homologe Strukturen aufweisen und sich in ihren Eigenschaften nur geringfügig unterscheiden. So werden beispielsweise Mischungen von Verbindungen (I) von der vorliegenden Erfindung mit umfaßt, die einen unterschiedlichen Ethoxylierungs- oder Propoxylierungsgrad aufweisen, in denen also n in der allgemeinen Formel (I) über einen mehr oder weniger großen Bereich streut.

Die erfindungsgemäßen Desinfektionsmittel enthalten aus den oben schon näher beschriebenen Gründen in der Regel Wasser. Dieses ist üblicherweise in einer Menge in den Desinfektionsmitteln enthalten, die die Summe der Mengen der desinfizierenden Wirkstoffe und der oberflächenaktiven Wirkstoffe zu 100 Gew.-% ergänzt. Bevorzugterweise liegt die Menge an Wasser im Bereich von 5 bis 35 Gew.-%; sie kann

jedoch in Ausnahmefällen auch darunter oder darüber liegen.

In einer besonders bevorzugten Ausführungsform enthalten Desinfektionsmittel mit ausgezeichneter Wirkung sowohl gegen Spulwurmeier als auch gegen Coccidienoozysten einen oder mehrere desinfizierende Wirkstoffe aus der Gruppe Formaldehyd, i-Propanol, p-Chlor-m-kresol, Natriumhypochlorit, $H_2O_2$, Peroxoessigsäure und PVP-Jod, wobei die Mengen der genannten desinfizierenden Wirkstoffe im Bereich von 5 bis 60 Gew.-%, bezogen auf das Gesamtgewicht des Desinfektionsmittelkonzentrats, liegen, und mehrere sulfatierte Hydroxymischether als oberflächenaktive Wirkstoffe, wobei die Summe der Mengen der oberflächenaktiven Wirkstoffe einen Gewichts-Anteil von 15 bis 40 Gew.-% erreicht und Wasser in einer Menge, die die Summe der Mengen von desinfizierenden Wirkstoffen und oberflächenaktiven Wirkstoffen zu 100 Gew.-% ergänzt.

Die oben näher beschriebenen Desinfektionsmittel mit parasitenabtötender Wirkung kommen in der Regel als Konzentrate in den Handel, die Wasser in einer Menge von maximal 35 Gew.-% enthalten. Der Wasseranteil dient, wie schon näher ausgeführt, zur Verbesserung der Homogenität und Lagerbeständigkeit der Desinfektionsmittel-Konzentrate sowie zur Erleichterung der Auflösbarkeit der Konzentrate in Wasser bei der Herstellung verdünnter Anwendungslösungen. Vor der Anwendung zur Desinfektion gegen parasitäre Dauerformen, beispielsweise in Geflügel-, Schweine- oder Rinderställen, werden verdünnte Spüllösungen hergestellt, die einen Gehalt im Bereich von 0,5 bis 5 % der erfindungsgemäßen Desinfektionsmittel aufweisen und darüberhinaus aus Wasser bestehen. Derartige wässrige Lösungen werden in bekannter Weise in Stallungen, Tierboxen oder ähnlichem ausgesprüht oder in den von den Parasiten befallenen Räumen vernebelt und bewirken bei gleichmäßiger Verteilung eine sichere Abtötung von Spulwurmeiern bzw. Unschädlichmachung von Coccidienoozysten oder Dauerformen anderer, ansonsten durch Desinfektionsmittel nur schwer bekämpfbarer parasitärer Schädlinge. Ein besonderer Vorteil der erfindungsgemäßen Desinfektionsmittel bzw. der mit ihnen hergestellten verdünnten Anwendungslösungen besteht darin, daß weder bei der Herstellung noch beim Aussprühen giftige oder brennbare Dämpfe auftreten, wie sie aus früheren Desinfektionsmitteln, die $CS_2$ oder perhalogenierte Kohlenwasserstoffe enthielten, bekannt waren. Dadurch wird die Gefahr von Explosionen oder Bränden wie auch die Gefahr einer Vergiftung von Personal oder Nutztieren auf ein Minimum reduziert, wenn nicht ganz beseitigt. Zudem zeigen derartige Desinfektionsmittel eine hervorragende Wirksamkeit bei der Bekämpfung parasitärer, invasionsfähiger Dauerformen, wie beispielsweise Spulwurmeiern und/ oder Coccidienoozysten. Es ist mit den erfindungsgemäßen Desinfektionsmitteln möglich, Anwendungslösungen bereitzustellen, die entweder gezielt zur selektiven Bekämpfung einer der genannten parasitären Dauerformen eingesetzt werden können, oder auch solche Lösungen zuzubereiten, die gegen mehrere Dauerformen gleichzeitig wirksam sind. Dabei erreichen die erfindungsgemäßen Desinfektionsmittel in der beschriebenen Verwendung deutlich bessere Ergebnisse, als sie nach den Richtlinien für die Prüfung chemischer Desinfektionsmittel der DVG (Deutsche Veterniärmedizinische Gesellschaft) gefordert werden. Um nach diesen Richtlinien ein Präparat als wirksam zu deklarieren, müssen über 90 % der Eier abgetötet sein bzw. dürfen die Oozysten nicht mehr infektiös sein. Mit den erfindungsgemäßen Mitteln ist eine Abtötungsrate von über 98 % der Eier bzw. eine quantitative Vernichtungsrate der Oozysten schon bei Einwirkzeiten und Konzentrationen in der Anwendungslösung zu erreichen, die deutlich unter den Werten für aus dem Stand der Technik bekannte Desinfektionsmittel für den gleichen Zweck liegen.

Die Erfindung wird durch die nachfolgenden Beispiele näher erläutert.

## Beispiele

### Beispiele 1 bis 16

Auf der Grundlage der folgenden Standardrezeptur

| (GT = Gewichtsteile) | |
|---|---|
| 30 GT | Isopropanol (80 %ig) |
| 25 GT | sulfatierter Hydroxyalkylpolyethylenglykolether der Formel (V) |
| 15 GT | eines mit n-Butylresten endgruppenverschlossenen Anlagerungsproduktes von 9 Mol Ethylenoxid an 1 Mol Fettalkohol der Kettenlänge $C_{12}$-$C_{18}$ (50 %ig) |
| 12 GT | p-Chlor-m-kresol |
| 6 GT | Natriumpentadecansulfonat (94 %ig) |
| 0,525 GT | Phosphorsäure (75 %ig) |
| 11,475 GT | vollentsalztes Wasser |

wurden Desinfektionsmittelkonzentrate zusammengestellt und so lange gerührt bis alle Bestandteile gelöst waren. Als sulfatierte Hydroxyalkylpolyethylenglykolether der Formel V wurden die in der nachstehenden Tabelle I angegebenen Verbindungen in die Konzentrate eingearbeitet.

Bei der Prüfung der erfindungsgemäßen Mittel auf ihre Wirksamkeit wurden jeweils 5 Volumenteile Konzentrat mit vollentsalztem Wasser auf 200 Volumenteile gebrauchsfertige Desinfektionsmittellösung aufgefüllt.

Zur Prüfung der Wirksamkeit der Desinfektionsmittel an parasitären Dauerformen wurden sporulierte Oozysten (infektiöse Stadien) der Hühnercoccidiose verwendet. Jeweils 50 ml der gebrauchsfertigen Desinfektionsmittellösung wurden mit so viel Coccidienoozysten versetzt, daß deren Konzentration 2000 Stück/ml betrug. In einer Schüttelapparatur wurden die Proben 4 Stunden lang bei Raumtemperatur geschüttelt. Danach wurden die festen Bestandteile der Proben abzentrifugiert und in 50 ml gesättigter Natriumchloridlösung aufgeschlämmt. An aliquoten Anteilen der dabei erhaltenen Suspensionen wurde in einer Zählkammer nach MacMaster die Anzahl der überlebenden Oozysten ermittelt und durch Vergleich mit einer Blindprobe (2000 Oozysten/ml in vollentsalztem Wasser), die der gleichen Schüttelbehandlung unterworfen war, die Abtötungsrate ermittelt.

Als Vergleichszusammensetzung diente ein Desinfektionsmittel des Standes der Technik (DE-OS 23 17 225), das folgende Zusammensetzung hatte:

| | |
|---|---|
| 40 GT | Isopropanol (80 %ig) |
| 20 GT | Perchlorethylen |
| 16 GT | p-Chlor-m-kresol |
| 8 GT | Natriumpentadecansulfonat (94 %ig) |
| 0,7 GT | Phosphorsäure (75 %ig) |
| 15,3 GT | vollentsalztes Wasser |

Auch hier wurden zur Herstellung der gebrauchsfertigen Desinfektionsmittellösung 5 Volumenteile Konzentrat mit vollentsalztem Wasser auf 100 Volumenteile aufgefüllt.

Die mit den vorstehend beschriebenen Zusammensetzungen erzielten Abtötungsraten sind in der letzten Spalte der Tabelle II angegeben.

Tabelle I

Wirksamkeit der Zusammensetzung mit einem Gehalt an Verbindungen der Formel (V) gegen Coccidienoozysten

$$R^1 - \underset{\displaystyle OSO_3Na}{CH} - \overset{\displaystyle R^3}{CH} - (OCH_2CH_2) - OR^4 \qquad (V)$$

| Beispiel | $R^1$ | R | $R^4$ | n | Abtötungsreste (%) |
|---|---|---|---|---|---|
| 1 | $C_6H_{13}$ | H | $CH_3$ | 4 | 95,5 |
| 2 | $C_6H_{13}$ | H | $C_4H_9$ | 5 | 95,0 |
| 3 | $C_6H_{13}$ | H | $C_8H_{17}$ | 4 | 100,0 |
| 4 | $C_6H_{13}$ | H | $C_8H_{17}$ | 9 | 100,0 |
| 5 | $C_6H_{13}$ | H | $C_{12}H_{25}/C_{14}H_{29}$ | 4 | 94,0 |
| 6 | $C_6H_{13}$ | H | $C_{12}H_{25}/C_{14}H_{29}$ | 9 | 100,0 |
| 7 | $C_{10}H_{21}$ | H | $CH_3$ | 1 | 96,0 |
| 8 | $C_{10}H_{21}$ | H | $C_8H_{17}$ | 4 | 90,0 |
| 9 | $C_{10}H_{21}$ | H | $C_8H_{17}$ | 9 | 100,0 |
| 10 | $C_{10}H_{21}$ | H | $C_{12}H_{25}/C_{14}H_{29}$ | 4 | 99,0 |
| 11 | $C_{12}H_{25}$ | H | $C_4H_9$ | 10 | 95,0 |
| 12 | $C_{14}H_{29}$ | H | $C_{12}H_{25}/C_{14}H_{29}$ | 9 | 99,7 |
| 13 | $C_{16}H_{33}$ | H | $CH_3$ | 4 | 96,0 |
| 14 | $C_{16}H_{33}$ | H | $C_{12}H_{25}/C_{14}H_{29}$ | 4 | 99,0 |
| 15 | $R^1+R^3 = C_{12}H_{26}$ | | $C_4H_9$ | 2 | 97,5 |
| 16 | $R^1+R^3 = C_{12}H_{26}$ | | $C_4H_9$ | 10 | 99,0 |
| Vergleichszusammensetzungen | | | | | 88,0 |

Beispiel 17

Aus den folgenden Komponenten wird ein Desinfektionsmittelkonzentrat zusammengestellt und so lange gerührt bis alle Bestandteile gelöst sind:

| | |
|---|---|
| 65 GT | Wasserstoffperoxidlösung (65 %ig) |
| 15 GT | eines mit n-Butylresten endgruppenverschlossenen Anlangerungsproduktes von 9 Mol Ethylenoxid an 1 Mol Fettalkohol der Kettenlänge $C_{12}$-$C_{18}$ (50 %ig) |
| 20 GT | des sulfatierten Hydroxyalkylpolyethylenglykolethers aus Beispiel 9 |

Zur Anwendung gegen parasitäre Dauerformen (z.B. Oozysten der Hühnercoccidiose oder Eier des Schweinespulwurms) werden 5 Volumenteile des Konzentrats mit Wasser auf 100 Volumenteile gebrauchsfertige Lösung aufgefüllt.

Beispiel 18

Aus den folgenden Komponenten wird ein Desinfektionsmittelkonzentrat zusammengestellt und so lange gerührt bis eine homogene Lösung entstanden ist:

| | |
|---|---|
| 20,7 GT | Formaldehyd (37 %ig) |
| 20,7 GT | Glyoxal (40 %ig) |
| 5,2 GT | Glutaraldehyd (50 %ig) |
| 3,45 GT | Oligohexamethylenbiguanid-hydrochlorid (n = 4-6) (20 %ig) |
| 3,7 GT | $C_{12}$-$C_{14}$-Alkylbenzyldimethylammoniumchlorid |
| 1,4 GT | Natriumbenzoat |
| 15 GT | des sulfatierten Hydroxyalkylpolyethylenglykolethers aus Beispiel 12 |
| 1,2 GT | Natriumhydroxidlösung (50 %ig) |
| 3,65 GT | Farbstoff, Parfüm und vollentsalztes Wasser |

Zur Herstellung von gebrauchsfertigen Lösungen werden 5 Volumenteile Konzentrat mit Wasser auf 100 Volumenteile aufgefüllt.

## Ansprüche

1. Desinfektionsmittel zur Bekämpfung und Abtötung von parasitären, invasionsfähigen Dauerformen auf der Basis von Gemischen aus desinfizierenden Wirkstoffen und oberflächenaktiven Wirkstoffen, dadurch gekennzeichnet, daß sie
(a) einen oder mehrere Desinfektionswirkstoffe aus der Gruppe aliphatische Aldehyde mit 1 bis 5 C-Atomen, aliphatische Alkohole mit 1 bis 4 C-Atomen, unsubstituierte und substituierte Phenole, $Cl_2$- und $O_2$-entwickelnde Reagenzien und Aktivjod enthaltende Reagenzien,
(b) einen oder mehrere sulfatierte Hydroxyalkylpolyethylen-und Hydroxyalkylpolypropylenglykolether der allgemeinen Formel (I)

$$R^1-\underset{OSO_3M}{CH}-\overset{R^3}{CH}-(\overset{R^4}{OCH}-CH_2)_n-OR^2 \qquad (I)$$

in der
$R^1$ für Wasserstoff oder einen linearen Alkylrest mit 1 bis 16 C-Atomen,
$R^2$ für einen linearen oder verzweigten, gesättigten Alkylrest mit 1 bis 22 C-Atomen,
$R^3$ für Wasserstoff oder einen linearen Alkylrest mit 1 bis 16 C-Atomen,
$R^4$ für Wasserstoff oder eine Methylgruppe,
M für Wasserstoff, Ammonium, Alkylammonium, Alkanolammonium, worin die Alkyl- und Alkanolreste je 1 bis 4 C-Atome haben, oder ein einwertiges Metallatom und

n für eine Zahl im Bereich von 0 bis 12

stehen, mit der Maßgabe, daß die Gesamtzahl der in $R^1$ und $R^3$ enthaltenen C-Atome 6 bis 16 beträgt, sowie Mischungen mehrerer derartiger Verbindungen als oberflächenaktive Wirkstoffe,

und

(c) Wasser

enthalten.

2. Desinfektionsmittel nach Anspruch 1, dadurch gekennzeichnet, daß sie

(a) einen oder mehrere Desinfektionswirkstoffe aus der Gruppe aliphatische Aldehyde mit 1 bis 5 C-Atomen, aliphatische Alkohole mit 1 bis 4 C-Atomen, unsubstituierte und substituierte Phenole, $Cl_2$- und $O_2$-entwickelnde Reagenzien und Aktivjod enthaltende Reagenzien, in Mengen von 0,1 bis 80 Gew.-%, bezogen auf das Gesamtgewicht des Desinfektionsmittelkonzentrats,

(b) einen oder mehrere sulfatierte Hydroxyalkylpolyethylen-und Hydroxyalkylpolypropylenglykolether als oberflächenaktive Wirkstoffe in Mengen von 10 bis 50 Gew.-%, bezogen auf das Gesamtgewicht des Desinfektionsmittelkonzentrats und

(c) Wasser in einer Menge, die die Summe der desinfizierend wirkenden und oberflächenaktiven Komponenten zu 100 Gew.-% ergänzt,

enthalten.

3. Desinfektionsmittel nach Ansprüchen 1 und 2, dadurch gekennzeichnet, daß sie einen oder mehrere Desinfektionswirkstoffe aus der Gruppe Formaldehyd, Glyoxal, Glutardialdehyd, Methanol, Ethanol, n-Propanol, i-Propanol, Phenol, chlorierte Phenole, wasserlösliche Alkalimetallhypohalogenite, Wasserstoffperoxid, Peroxocarbonsäuren mit 1 bis 4 C-Atomen und PVP-Jod enthalten.

4. Desinfektionsmittel nach Anspruch 3, dadurch gekennzeichnet, daß sie einen oder mehrere Desinfektionswirkstoffe aus der Gruppe Formaldehyd, i-Propanol, p-Chlor-m-kresol, Natriumhypochlorid, $H_2O_2$, Peroxoessigsäure und PVP-Jod enthalten.

5. Desinfektionsmittel nach Ansprüchen 1 bis 4, dadurch gekennzeichnet, daß sie

(a) einen oder mehrere Desinfektionswirkstoffe aus der Gruppe Formaldehyd, i-Propanol, p-Chlor-m-kresol, Natriumhyperchlorit, $H_2O_2$, Peroxoessigsäure und PVP-Jod, wobei die Summe der Mengen der desinfizierenden Wirkstoffe im Bereich von 5 bis 60 Gew.-%, bezogen auf das Gesamtgewicht des Desinfektionsmittel-Konzentrats liegt,

(b) sulfatierte Hydroxyalkylpolyethylen- und Hydroxyalkylpolypropylenglykolether als oberflächenaktive Wirkstoffe, wobei die Summe der Menge der oberflächenaktiven Wirkstoffe im Bereich von 15 bis 40 Gew.-% liegt, und

(c) Wasser in einer Menge, die die Summe der Mengen der desinfizierenden und der oberflächenaktiven Wirkstoffe zu 100 Gew.-% ergänzt,

enthalten.

6. Verwendung der Desinfektionsmittel nach Ansprüchen 1 bis 5 zur Bekämpfung und Abtötung von parasitären, invasionsfähigen Dauerformen.

7. Verwendung der Desinfektionsmittel nach Ansprüchen 1 bis 5 zur Bekämpfung von Spulwurmeiern und Coccidienoozysten.

8. Verwendung der Desinfektionsmittel nach Ansprüchen 1 bis 5 zur Bekämpfung und Abtötung von parasitären, invasionsfähigen Dauerformen in verdünnten wässrigen Lösungen mit einem Desinfektionsmittel-Gehalt von 0,5 bis 5 Gew.-%, bezogen auf die verdünnte Anwendungslösung.

Europäisches Patentamt

# EUROPÄISCHER RECHERCHENBERICHT

Nummer der Anmeldung

EP 89 10 6481

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 224 170 (HENKEL) * Seite 2, Zeilen 13-18 * & DE-A-2 317 225 (Kat. D) --- | 1-8 | A 01 N 25/30<br>A 01 N 31/04<br>A 01 N 31/08<br>A 01 N 35/02<br>A 01 N 37/16<br>A 01 N 59/00<br>A 01 N 59/12 |
| A | CHEMICAL ABSTRACTS, Band 104, Nr. 7, 17. Februar 1986, Seite 182, Nr. 47059g, Columbus, Ohio, US; V.F. ABRAMOVA et al.: "Deinfestation media in coccidiosis of rabbits", & PROFIL. PARAZIT. BOLEZN. ZHIVOTN. 1985, 30-3 * Zusammenfassung * ----- | 1-8 | |
| | | | **RECHERCHIERTE SACHGEBIETE (Int. Cl.4)** |
| | | | A 01 N |

Der vorliegende Recherchenbericht wurde für alle Patentansprüche erstellt

| Recherchenort | Abschlußdatum der Recherche | Prüfer |
|---|---|---|
| DEN HAAG | 20-07-1989 | DECORTE D. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)